# EUROPEAN PATENT APPLICATION

(11) **EP 4 503 174 A1**
(43) Date of publication of application: **05.02.2025**
(21) Application number: 24794322.8
(22) Date of filing: 01.04.2024
(51) Int. Cl.: H01M 4/133, H01M 4/62, H01M 4/139, H01M 10/052, H01M 4/134, H01M 4/583, H01M 4/13, H01M 10/42, H01M 4/02

(54) **ELECTRODE FOR LITHIUM SECONDARY BATTERY, MANUFACTURING METHOD THEREFOR, AND LITHIUM SECONDARY BATTERY INCLUDING ELECTRODE**

(30) Priority: 24.04.2023 KR 20230053337; 28.03.2024 KR 20240042820
(71) Applicant: LG Chem, Ltd., Yeongdeungpo-gu Seoul 07336 (KR)
(72) Inventor: YU, Ingyoung, Daejeon 34122 (KR); LEE, Kyoungsoo, Daejeon 34122 (KR); KIM, Su Jun, Daejeon 34122 (KR); JIN, Sun Mi, Daejeon 34122 (KR)
(74) Representative: Hoffmann Eitle
(86) International application number: PCT/KR2024/004167
(87) International publication number: WO 2024/225634

(57) **Abstract**

The present disclosure relates to an electrode for lithium ion secondary battery, a method of manufacturing the same and a lithium ion secondary battery comprising the same. According to the present disclosure, an electrode for lithium ion secondary battery that has a dense bond between a porous layer and an electrode active material layer, and also imparts high flexibility to the porous layer, thereby capable of exhibiting excellent durability during charge and discharge, a method of manufacturing the same and a lithium ion secondary battery comprising the electrode are provided.

## Description

### [TECHNICAL FIELD]

### CROSS-REFERENCE TO RELATED APPLICATION(S)

This application claims the benefit of Korean Patent Application No. 10-2023-0053337 filed on April 24, 2023 and Korean Patent Application No. 10-2024-0042820 filed on March 28, 2024 in the Korean Intellectual Property Office, the disclosures of which are incorporated herein by reference in their entirety.

The present disclosure relates to an electrode for lithium ion secondary battery, a method of manufacturing the same and a lithium ion secondary battery comprising the same.

### [BACKGROUND OF ART]

Recently, as the development of a technology and the demand for a mobile device have increased, the demand for a chargeable/dischargeable secondary battery as an energy source has rapidly increased, and various research into secondary batteries capable of meeting various needs has been carried out accordingly. In addition, the secondary battery has attracted considerable attention as a power source for an electric vehicle (EV), a hybrid electric vehicle (HEV), a plug-in hybrid electric vehicle (Plug-in HEV) and the like, which have been developed to solve air pollution and the like, caused by existing gasoline and diesel vehicles using fossil fuel.

When the lithium ion secondary battery causes a short circuit due to contact between positive electrode and negative electrode, it leads to the generation of extreme heat and the explosion. Accordingly, a porous separator was applied to the lithium arch battery, but the porous separator of the secondary battery shows extreme heat shrinkage behavior at temperatures of about 100°C or more due to the features of its material and its manufacturing process including stretching, which pose a problem of causing a short circuit between positive electrode and negative electrode.

Therefore, there is a need to research a lithium ion secondary battery that includes a separator with excellent coating properties and can achieve stability and long battery life characteristics at high temperatures.

### [DETAILED DESCRIPTION OF THE INVENTION]

### [Technical Problem]

It is an object of the present disclosure to provide an electrode for lithium ion secondary battery that has excellent bonding durability between a porous layer and an electrode substrate.

It is another object of the present disclosure to provide a method of manufacturing the electrode for lithium ion secondary battery.

It is yet another object of the present disclosure to provide a lithium ion secondary battery comprising the electrode.

### [Technical Solution]

According to one embodiment of the present disclosure, there is provided an electrode for lithium ion secondary battery comprising:
an electrode active material layer and a porous layer laminated on an electrode current collector layer,
wherein the porous layer comprises a polymer binder including a copolymer containing a hard segment of the following Chemical Formula 1 and a soft segment of the following Chemical Formula 2 and inorganic fine particles dispersed in the polymer binder: 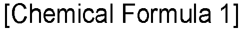 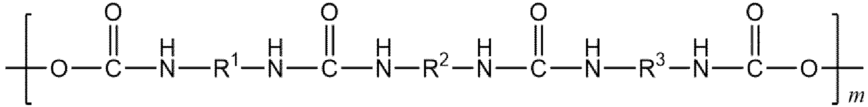 wherein in Chemical Formula 1,
   R¹ and R³ are each independently 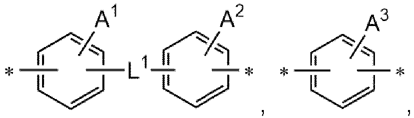 or 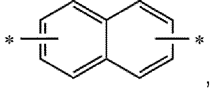 wherein A¹ to A³ are each independently hydrogen or an alkyl group having 1 to 3 carbon atoms, and L¹ is a chemical bond or a methylene group;
   R² is an alkylene group having 1 to 5 carbon atoms; 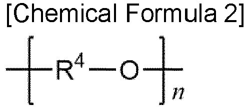 wherein in Chemical Formula 2,
      R⁴ is an alkylene group having 3 to 6 carbon atoms.

According to another embodiment of the present disclosure, there is provided a method of manufacturing the electrode for lithium ion secondary battery, the method comprising the steps of:
forming an electrode active material layer by applying an electrode material composition containing an electrode active material onto an electrode current collector layer;
preparing an inorganic fine particle dispersion in which inorganic fine particles and a dispersant are dispersed in a solvent;
preparing a binder solution in which a polymer binder containing a copolymer containing the hard segment of Chemical Formula 1 and the soft segment of Chemical Formula 2 is dissolved in a solvent;
preparing a slurry for forming a porous layer by mixing the binder solution with the inorganic fine particle dispersion; and
forming a porous layer by applying the slurry for forming a porous layer onto the electrode active material layer.

According to another embodiment of the present disclosure, there is provided a slurry for forming a porous layer of an electrode for lithium ion secondary battery, comprising: the polymer binder and inorganic fine particles dispersed in the polymer binder.

According to yet another embodiment of the present disclosure, there is provided a lithium ion secondary battery comprising the electrode for lithium ion secondary battery.

Now, an electrode for lithium ion secondary battery according to embodiments of the present disclosure, a method of manufacturing the same and a lithium ion secondary battery comprising the same will be described in more detail.

Terms or words used in the present specification and claims should not be construed as limited to ordinary or dictionary terms, and the present invention should be construed with meanings and concepts that are consistent with the technical idea of the present disclosure based on the principle that the inventors can appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon~', 'above~', 'below~', and 'next to-', one or more other portions may be arranged between two portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

In the present invention, any one layer being bonded with another layer "through" another layer means that one layer and the other layer are stacked and bonded by the other layer interposed in at least a partial region between the one layer and the other layer.

According to one embodiment of the present disclosure, there is provided an electrode for lithium ion secondary battery comprising:
an electrode active material layer and a porous layer stacked on an electrode current collector layer,
wherein the porous layer comprises a polymer binder including a copolymer containing a hard segment of the following Chemical Formula 1 and a soft segment of the following Chemical Formula 2 and inorganic fine particles dispersed in the polymer binder: 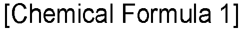 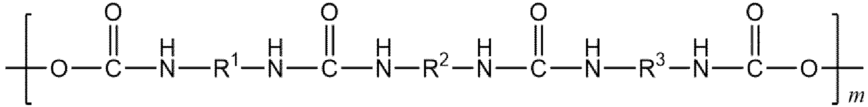 wherein in Chemical Formula 1,
   R¹ and R³ are each independently 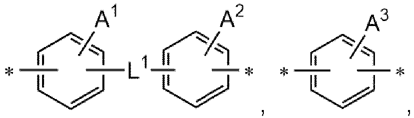 or 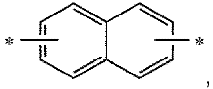 wherein A¹ to A³ are each independently hydrogen or an alkyl group having 1 to 3 carbon atoms, and L¹ is a chemical bond or a methylene group;
   R² is an alkylene group having 1 to 5 carbon atoms; 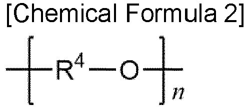 wherein in Chemical Formula 2,
      R⁴ is an alkylene group having 3 to 6 carbon atoms.

As a result of further studies by the present inventors, it was confirmed that an electrode for lithium ion secondary battery that satisfies the above configuration has a dense bond between a porous layer and an electrode active material layer, and also imparts high flexibility to the porous layer, thereby capable of exhibiting excellent durability during charge and discharge.

According to one embodiment of the disclosure, the electrode for lithium ion secondary battery may be a negative electrode or a positive electrode.

An electrode current collector that is known in the technical field to which the present disclosure pertains to have conductivity while not causing any chemical change in a lithium ion secondary battery may be applied to the electrode current collector layer. In one example, the electrode current collector that may be used includes stainless steel; aluminum; nickel; titanium; fired carbon; or an aluminum or stainless steel whose surface is treated with carbon, nickel, titanium, silver, etc.

Preferably, the electrode current collector may have a thickness of 3 ,um to 500 *µ*m. The electrode current collector may form fine protrusions and depressions on the surface thereof to enhance the adhesive force with the electrode material. The electrode current collector can be used in various forms such as a film, a sheet, a foil, a net, a porous body, a foaming body, and a non-woven fabric structure.

The electrode active material layer includes an electrode material composition that is a mixture of an electrode active material, a conductive material and a binder.

The conductive material may be used for imparting electronic conductivity to the electrode.

The conductive material may be used without particular limitation as long as it has electronic conductivity while not causing any chemical change in a lithium ion secondary battery. As a non-limiting example, the conductive material may include carbon-based materials such as carbon black, acetylene black, ketjen black, channel black, furnace black, lamp black, thermal black and carbon fiber; graphite such as natural graphite and artificial graphite; metal powder or metal fibers such as copper, nickel, aluminum and silver; conductive whisker such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 1 % by weight to 10% by weight, or 1% by weight to 5% by weight based on the total weight of the electrode material.

The binder is used for properly attaching the electrode material composition to the electrode current collector.

As non-limiting examples, the binder may include polyvinyl alcohol, polyacrylate, carboxymethyl cellulose, hydroxypropyl cellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, and the like. As the binder, one or a mixture of two or more of the examples described above may be used.

The content of the binder may be adjusted within a range that does not cause a decrease in capacity of the battery while exhibiting an appropriate level of adhesive property. Preferably, the content of the binder may be 1% by weight to 10% by weight, or 1% by weight to 5% by weight based on the total weight of the electrode material.

When the electrode for lithium ion secondary battery is a positive electrode, the positive electrode active material can be used without particular limitation as long as it is a material capable of reversibly intercalating/deintercalating lithium ions.

In one example, the positive electrode active material may be a composite oxide or phosphate containing cobalt, manganese, nickel, iron, or a combination of lithium and these metals.

In another example, the positive electrode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or combinations thereof; Q is Ti, Mo, Mn or a combination thereof; T is Cr, V, Fe, Sc, Y or a combination thereof; and J is V, Cr, Mn, Co, Ni, Cu or combinations thereof.

Those having a coating layer on the surface of the positive electrode active material can be used, or a mixture of the positive electrode active material and a positive electrode active material having a coating layer can be used. As the coating element included in the coating layer, Mg, Al, Co, K, Na, Ca, Si, Ti, V, Sn, Ge, Ga, B, As, Zr, or a mixture thereof can be used.

According to one embodiment, the electrode active material may be contained in an amount of 80% to 95% by weight based on the total weight of the electrode material composition. Preferably, the content of the positive electrode active material may be 82% by weight to 95% by weight, or 82% by weight to 93% by weight, or 85% by weight to 93% by weight, or 85% by weight to 90% by weight, based on the total weight of the electrode material composition.

When the electrode for lithium ion secondary battery is a negative electrode, the negative electrode active material may include a material capable of reversibly intercalating/deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, SiOₓ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, SnO₂, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with SiO₂ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

Preferably, the negative electrode active material may include one or more compounds selected from the group consisting of a carbonaceous material and a silicon compound. Here, the carbonaceous material is a material containing at least one selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOₓ (wherein 0<x<2), the Si-Q alloy, mixtures thereof, or a mixture of at least one thereof and SiO₂.

According to one embodiment, the negative electrode active material may be contained in an amount of 85% by weight to 98% by weight based on the total weight of the electrode material composition. Preferably, the content of the negative electrode active material may be 85% by weight to 97% by weight, or 87% by weight to 97% by weight, or 87% by weight to 95% by weight, or 90% by weight to 95% by weight based on the total weight of the negative electrode material composition.

According to one embodiment, the thickness of the electrode active material layer is preferably adjusted in the range of 5 ,um to 500 µm, or 5 µm to 450 µm, or 10 *µ*m to 450 *µ*m in order to realize appropriate performance.

Meanwhile, the electrode for lithium ion secondary battery includes a porous layer laminated on an electrode current collector layer.

According to one embodiment, the porous layer includes a polymer binder and inorganic fine particles dispersed in the polymer binder.

In particular, the polymer binder includes a copolymer containing a hard segment of the following Chemical Formula 1 and a soft segment of the following Chemical Formula 2: 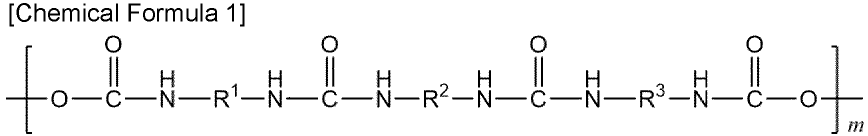 wherein in Chemical Formula 1,
R¹ and R³ are each independently 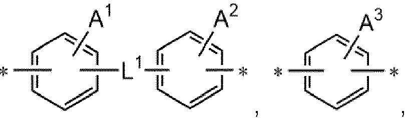 or 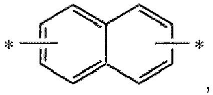 wherein A¹ to A³ are each independently hydrogen or an alkyl group having 1 to 3 carbon atoms, and L¹ is a chemical bond or a methylene group;
R² is an alkylene group having 1 to 5 carbon atoms; 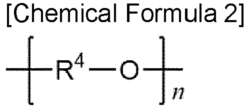 wherein in Chemical Formula 2,
   R⁴ is an alkylene group having 3 to 6 carbon atoms.

The copolymer has a hard segment capable of hydrogen bonding to the electrode active material layer and a soft segment that imparts high flexibility to the copolymer. Accordingly, the bond between the porous layer and the electrode active material layer is dense, and also high flexibility is imparted to the porous layer, thereby capable of exhibiting excellent durability during charge and discharge.

In the copolymer, the R¹ and R³ are each independently

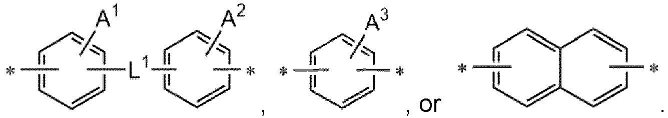

Wherein, the A¹ to A³ are each independently hydrogen or an alkyl group having 1 to 3 carbon atoms, and the L¹ is a chemical bond or a methylene group. Preferably, the A¹ to A³ may be each independently hydrogen, a methyl group, or an ethyl group. Preferably, the L¹ may be a methylene group.

According to one embodiment, the R¹ and R³ may have each independently the structure derived from 4,4'-diphenylmethane diisocyanate(4,4'-MDI), 1,4-phenylene diisocyanate, 1,3-phenylene diisocyanate, 2,4-toluene diisocyanate(2,4-TDI), 2,6-toluene diisocyanate(2,6-TDI), or 1,5-naphthalene diisocyanate.

According to one embodiment, the R¹ and R³ may be each independently

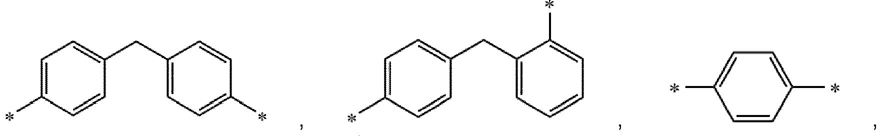

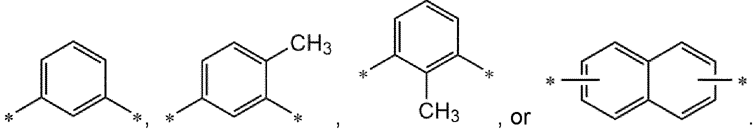

According to one embodiment, the R¹ and R³ may each have a structure of 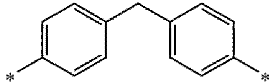 derived from 4,4'-diphenylmethane diisocyanate(4,4'-MDI).

In the copolymer, the R² is an alkylene group having 1 to 5 carbon atoms. According to one embodiment, the R² may have the above structure derived from methylene diamine, ethylene diamine, 1,3-diaminopropane, 1,4-diaminobutane, or 1,5-diaminopentane. Preferably, the R² may be a methylene group (*-CH₂-*), an ethylene group (*-CH₂-CH₂-*), or a propylene group (*-CH₂-CH₂-CH₂-*). According to one embodiment, the R² may have a structure of an ethylene group (*-CH₂-CH₂-*) derived from ethylene diamine (EDA).

In Chemical Formula 2, the R⁴ is an alkylene group having 3 to 6 carbon atoms. Preferably, the R⁴ may be a propylene group (*-CH₂-CH₂-CH₂-*) or a butylene group (*-CH₂-CH₂-CH₂-CH₂-*). According to one embodiment, the R⁴ may have the structure derived from polytrimethylene ether glycol or polytetramethylene ether glycol. According to one embodiment, the R⁴ may have the structure of a butylene group (*-CH₂-CH₂-CH₂-CH₂-*) derived from polytetramethylene ether glycol (PTMEG).

As a non-limiting example, the copolymer may be a copolymer comprising the hard segment of Chemical Formula 1 in which the R¹ and R³ each has a structure of 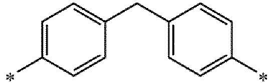 derived from 4,4'-diphenylmethane diisocyanate(4,4'-MDI), and the R² has a structure of an ethylene group (*-CH₂-CH₂-*) derived from ethylene diamine (EDA); and the soft segment of Chemical Formula 2 in which the R⁴ has a structure of a butylene group(*-CH₂-CH₂-CH₂-CH₂-*) derived from polytetramethylene ether glycol (PTMEG).

According to one embodiment, the copolymer may include the hard segment and the soft segment at a molar ratio of 80:20 to 95:5.

In order to ensure binding properties with the electrode active material layer while imparting appropriate mechanical properties to the polymer binder containing the copolymer, the molar ratio between the hard segment and the soft segment is preferably 80:20 or more. Further, in order to impart high flexibility to the porous layer, the molar ratio between the hard segment and the soft segment is preferably 95:5 or less.

Specifically, the molar ratio between the hard segment and the soft segment may be 80:20 or more or 85:15 or more; and 95:5 or less or 90:10 or less.

Preferably, the molar ratio between the hard segment and the soft segment may be 80:20 to 95:5, or 85:15 to 95:5, or 85:15 to 90:10.

According to one embodiment, the copolymer has a weight average molecular weight (Mw) of 100,000 g/mol to 1,000,000 g/mol.

In order to achieve an improvement effect due to application of the copolymer, the weight average molecular weight (Mw) of the copolymer may be 100,000 g/mol or more or 150,000 g/mol or more; and 1,000,000 g/mol or less, or 800,000 g/mol or less, or 600,000 g/mol or less, or 400,000 g/mol or less. Preferably, the weight average molecular weight(Mw) of the copolymer may be 100,000 g/mol to 1,000,000 g/mol; or 150,000 g/mol to 1,000,000 g/mol; or 150,000 g/mol to 800,000 g/mol; or 150,000 g/mol to 600,000 g/mol; or 150,000 g/mol to 400,000 g/mol.

As non-limiting examples, the weight average molecular weight (Mw) may be measured using Agilent PL-GPC 220 equipped with PolarGel MIXED-L column of a length of 300 mm (Polymer Laboratories). The measurement temperature is 65°C, tetrahydrofuran or dimethylformamide is used as a solvent, and the flow rate is 1 mL/min. A sample is prepared at a concentration of 10 mg/10 mL, and then, fed in an amount of 100 µL. With reference to a calibration curve formed using polystyrene standard, Mw and Mn values are derived. 8 kinds of polystyrene standard samples, each having a molecular weight(g/mol) of 580/ 3,940/ 8,450/ 31,400/ 70,950/ 316,500/ 956,000/ 4,230,000 are used.

According to one embodiment, as the copolymer, products prepared to satisfy the above-mentioned structure and weight average molecular weight, or commercial products (e.g., spandex, etc.) may be used.

Further, the polymer binder may further comprise one or more binder compounds selected from the group consisting of polyetherimide, polyvinylidene fluoride, poly(vinylidene fluoride-co-trichloroethylene), poly(vinylidene fluoride-co-chlorotrifluoroethylene), poly(vinylidenefluoride-co-trifluoroethylene), poly(vinylidenefluoride-co-tetrafluoroethylene), poly(vinylidenefluoride-co-hexafluoropropylene), butylacrylate, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

According to one embodiment, in order to achieve an improvement effect due to the application of the copolymer, the binder compounds are preferably included in an amount of 10 wt.% or more, or 10 wt.% to 100 wt.%, or 30 wt.% to 100 wt.%, or 50 wt.% to 100 wt.% based on the total weight of the polymer binder including a copolymer containing the hard segment of Chemical Formula 1 and the soft segment of Chemical Formula 2.

The inorganic fine particles form micropores due to empty spaces between particles, maintain their physical form at high temperatures, and are electrochemically stable.

It is preferable that the inorganic fine particles undergo no oxidation and/or reduction reaction in the operating voltage range of a secondary battery (e.g., 0 ~ 5V based on Li/Li+). The inorganic fine particles preferably have a high electrolyte ion transfer capability. The inorganic fine particles preferably have a density as low as possible so that they can be well dispersed within the polymer binder. In addition, the inorganic fine particles preferably have a high dielectric constant so that they can contribute to an increase in the dissociation degree of electrolyte salts in the electrolyte.

Preferably, the inorganic fine particles may be one or more selected from the group consisting of inorganic particles having a dielectric constant of 1 or more, inorganic particles having piezoelectricity, and inorganic particles having lithium ion transfer capability.

In one example, inorganic particles such as SrTiO₃, SnO₂, CeO₂, MgO, NiO, CaO, ZnO, ZrO₂, Y₂O₃, Al₂O₃, boehmite(AlO(OH)), Al(OH)₃, TiO₂, and SiC have a dielectric constant of 1 or more, and thus can be preferably applied as the inorganic fine particles.

In another example, the inorganic particles having piezoelectricity are nonconductors at normal pressure, but are materials that exhibit electrical conductivity due to changes in their internal structure when a certain pressure is applied. The piezoelectric inorganic particles have high dielectric constant characteristics with a dielectric constant of 100 or more. In addition, when the piezoelectric inorganic particles are stretched or compressed under the application of a certain range of pressure, they generate an electric charge so that one surface is charged positively(+) and the other surface is charged negatively(-), thereby generating a electric potential difference between the two surfaces. Due to the above characteristics that the piezoelectric inorganic particles have, when an internal short circuit occurs in the electrode of a secondary battery due to external impacts, it is possible to prevent direct contact between the positive electrode and the negative electrode, and to gradually reduce voltage and improve safety. As the piezoelectric inorganic particles, inorganic particles such as BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ can be preferably applied.

In yet another example, the inorganic particle having the lithium ion transport capability refers to an inorganic particle that contains lithium element but has the function of moving lithium ions without storing lithium. The inorganic particles having lithium ion transport capability enable improvement of lithium ion conductivity in the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be one or more selected from the group consisting of SrTiOs, SnO₂, CeO₂, MgO, NiO, CaO, ZnO, ZrO₂, Y₂O₃, Al₂O₃, AIO(OH), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

The inorganic fine particles preferably have a particle size of 0.001 µm to 10 *µ*m. In order to ensure dispersibility in the porous layer, the inorganic fine particles preferably have a particle size of 0.001 *µ*m or more. However, if the particle size of the inorganic fine particles is too large, the thickness of the porous layer increases and the mechanical properties deteriorate, and an excessively large pore size may cause an internal short circuit during charge and discharge of the secondary battery. Therefore, the inorganic fine particles preferably have a particle size of 10 ,um or less.

According to one embodiment, the porous layer may include 0.5 to 45 wt.% of the polymer binder and 55 to 99.5 wt.% of the inorganic fine particles.

In order to impart appropriate porosity and insulation property to the porous layer, the inorganic fine particles are preferably included in an amount of 55 wt.% or more, or 60 wt.% or more, or 65 wt.% or more, or 70 wt.% or more, or 75 wt.% or more, or 80 wt.% or more. However, if the inorganic fine particles are included in an excessive amount, the mechanical properties of the porous layer may decrease due to weakening of adhesive force. Therefore, the inorganic fine particles are preferably included in an amount of 99.5 wt.% or less, or 99 wt.% or less, or 95 wt.% or less.

Specifically, the porous layer may include 55 to 99.5 wt.%, or 60 to 99.5 wt.%, or 65 to 99.5 wt.%, or 70 to 99.5 wt.%, or 75 to 99.5 wt.%, or 80 to 99.5 wt.%, or 80 to 99 wt.%, or 80 to 95 wt.% of the inorganic fine particles and the remainder of the polymer binder.

According to one embodiment, the porosity of the porous layer may be 40 to 80%.

In terms of ensuring lithium ion permeability, the porosity of the porous layer is preferably 40% or more, or 45% or more, or 50% or more. However, if the porosity of the porous layer is too large, it may be difficult to secure adhesive force between the porous layer and the electrode, and an internal short circuit may occur during charge and discharge of the lithium ion secondary battery. Therefore, the porosity of the porous layer is preferably 80% or less, or 75% or less, or 70% or less.

Specifically, the porosity of the porous layer may be 40 to 80%, or 45 to 80%, or 45 to 75%, or 50 to 75%, or 50 to 70%.

The porosity can be measured by preparing a slurry for forming the porous layer and then coating the slurry onto a release film to produce an independent porous layer. That is, the composition and process conditions that can secure the porosity in the above range can be established through an experimental method, and these can be applied to actual production.

The porosity may be measured using scanning electron microscopy images (SEM), or may be measured using an adsorption gas such as nitrogen and a BET device, or may be measured by methods such as mercury intrusion porosimetry or capillary flow porometry. Alternatively, the porosity can be calculated from the thickness, weight, and theoretical density of the resulting porous layer.

The porous layer preferably has a porosity within a range suitable for exhibiting the characteristics of the porous layer. If the porosity of the porous layer is too large, an internal short circuit may occur during charge and discharge of the lithium ion secondary battery. Therefore, the porosity of the porous layer is preferably 60% or less.

According to one embodiment, the thickness of the porous layer is preferably adjusted in the range of 5 ,um to 100 *µ*m, or 5 *µ*m to 50 *µ*m, or 10 *µ*m to 50 ,um to realize appropriate performance.

Meanwhile, in the entire area between the electrode active material layer and the porous layer, an interfacial layer may exist in which the electrode material composition included in the electrode active material layer and the porous composition included in the porous layer are mixed.

In one example, the interface layer is a layer consisting of more than 0 wt.% and less than 100 wt.% of the electrode material composition and less than 100 wt.% and more than 0 wt.% of the porous composition.

According to another embodiment of the disclosure, there is provided a method of manufacturing the electrode for lithium ion secondary battery, the method comprising the steps of:
forming an electrode active material layer by applying an electrode material composition containing an electrode active material onto an electrode current collector layer;
preparing an inorganic fine particle dispersion in which inorganic fine particles and a dispersant are dispersed in a solvent;
preparing a binder solution in which a polymer binder including a copolymer containing the hard segment of Chemical Formula 1 and the soft segment of Chemical Formula 2 is dissolved in a solvent;
preparing a slurry for forming a porous layer by mixing the binder solution with the inorganic fine particle dispersion; and
forming a porous layer by applying the slurry for forming a porous layer onto the electrode active material layer.

The electrode for lithium ion secondary battery described above can be provided through the above manufacturing method.

First, a step of forming an electrode active material layer by applying an electrode material composition containing an electrode active material onto an electrode current collector layer may be performed. In the above step, the electrode current collector and the electrode material composition are replaced with the contents described above, respectively. The electrode active material layer may be formed by applying the electrode material composition onto the electrode current collector layer and drying it.

Separately from the above steps, a step of preparing an inorganic fine particle dispersion in which inorganic fine particles and a dispersant are dispersed in a solvent; a step of preparing a binder solution in which a polymer binder is dissolved in a solvent; and a step of preparing a slurry for forming a porous layer by mixing the binder solution with the inorganic fine particle dispersion may be performed.

As a result of further studies by the present inventors, it was confirmed that when preparing a slurry for forming a porous layer, the agglomeration phenomenon of the inorganic fine particles and the distribution state of the polymer binder and the inorganic fine particles may vary depending on the mixing order and mixing method of the constitution components. It was also confirmed that depending on the distribution state of the polymer binder and inorganic fine particles, it can have a significant effect on the binding force of the porous layer and the electrode active material layer.

In one example, when preparing a binder solution in which a polymer binder is dissolved in a solvent, and then adding inorganic fine particles thereto to prepare a slurry for forming a porous layer, it becomes impossible to provide an electrode for lithium ion secondary battery that satisfies the above characteristics, such as the dispersibility of inorganic fine particles being significantly reduced.

According to one embodiment, as the manufacturing method of the present disclosure comprises the steps of: preparing the inorganic fine particle dispersion; preparing the binder solution; and preparing a slurry for forming a porous layer by mixing the binder solution with the inorganic fine particle dispersion, an electrode for lithium ion secondary battery in which the porous layer and the electrode active material layer are densely bonded, and the porous layer is imparted with high flexibility can be provided.

In the above steps, the inorganic fine particles and polymer binder are replaced with the contents described above, respectively.

As the dispersant, compounds known to be suitable for dispersing inorganic fine particles in the technical field to which the present disclosure pertains, such as carboxylic acid-modified polyester copolymer and acetic acid, can be used.

In addition, a non-aqueous organic solvent may be used as the solvent. Specifically, the non-aqueous organic solvent may include an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as N-methyl-2-pyrrolidone (NMP), dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like. Among the above examples, the carbonate-based solvent suitable for dispersing inorganic fine particles can be preferably used as the non-aqueous organic solvent.

According to one embodiment, the slurry for forming the porous layer preferably has 30 wt.% to 95 wt.% of a solid content including the inorganic fine particles.

If the solid content of the porous slurry is too high, it may cause an increase in viscosity and may not easily penetrate into the pore area of the electrode active material layer, thereby failing to form the interface layer 25 with an appropriate structure. However, if the solid content of the porous slurry is too low, a pinhole phenomenon may occur when applied onto the electrode active material layer.

Specifically, the solid content of the porous slurry may be 30 wt.% or more or 35 wt.% or more; and 95 wt.% or less or 90 wt.% or less. Preferably, the solid content of the porous slurry may be 30 wt.% to 95 wt.%, or 30 wt.% to 90 wt.%, or 35 wt.% to 90 wt.%.

Next, a step of forming a porous layer by applying the slurry for forming a porous layer onto the electrode active material layer is performed. The porous layer may be formed by applying the slurry for forming a porous layer onto the electrode active material layer and drying it. The above steps can be performed in consideration of the thicknesses of the electrode active material layer and the porous layer described above.

In the above steps, drying is preferably performed at a temperature of 50°C to 150°C, or 60°C to 150°C, or 60°C to 120°C, or 65°C to 110°C, respectively. If the drying temperature does not meet the above range, the drying efficiency may decrease or the shape of each layer may change, which may cause defects.

According to another example embodiment of the disclosure, there is provided a slurry for forming a porous layer of an electrode for lithium ion secondary battery, comprising: the polymer binder and inorganic fine particles dispersed in the polymer binder.

In the slurry for forming the porous layer, the polymer binder and the inorganic fine particles are replaced with the contents described above, respectively.

The slurry for forming the porous layer may be obtained through a step of preparing an inorganic fine particle dispersion in which inorganic fine particles and a dispersant are dispersed in a solvent; a step of preparing a binder solution in which a polymer binder including a copolymer containing the hard segment of Chemical Formula 1 and the soft segment of Chemical Formula 2 is dissolved in a solvent; and a step of preparing a slurry for forming a porous layer by mixing the binder solution with the inorganic fine particle dispersion.

According to yet another example embodiment of the disclosure, there is provided a lithium ion secondary battery comprising the above-mentioned electrode.

In one example, the lithium ion secondary battery may comprise an electrode assembly including a counter electrode disposed on the porous layer of the electrode; an electrolyte impregnated in the electrode assembly; and a battery case that seals and stores the electrode assembly and the electrolyte.

As the lithium ion secondary battery comprises the above-mentioned electrode assembly, it can exhibit excellent durability and stable performance.

The lithium ion secondary battery may have various shapes, such as a prismatic shape, a cylindrical shape, or pouch shape.

The lithium ion secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

According to one embodiment, the electrolyte can be used without particular limitation as long as it is known to be applicable to lithium ion secondary batteries in the technical field to which the present invention pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

Specifically, the electrolyte may include a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial positive electrode material, the non-aqueous organic solvent may be preferably a mixture of a cyclic carbonate having high ionic conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium ion secondary battery and facilitates movement of lithium ions between the positive electrode and the negative electrode.

The lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O₄)₂, and the like. Specifically, the lithium salt may be LiPF₆, LiFSI, LiTFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% by weight to 5% by weight with respect to the total weight of the electrolyte.

### [ADVANTAGEOUS EFFECTS]

According to the present disclosure, an electrode for lithium ion secondary battery that has a dense bond between a porous layer and an electrode active material layer, and also imparts high flexibility to the porous layer, thereby capable of exhibiting excellent durability during charge and discharge, a method of manufacturing the same and a lithium ion secondary battery comprising the electrode are provided.

### [BRIEF DESCRIPTION OF THE DRAWINGS]

FIG. 1 is a scanning electron microscope(SEM) image of an electrode for lithium ion secondary battery according to Example 1.
FIG. 2 is an SEM image of an electrode for lithium ion secondary battery according to Example 2.
FIG. 3 is an SEM image of an electrode for lithium ion secondary battery according to Example 3.
FIG. 4 is an SEM image of an electrode for lithium ion secondary battery according to Example 4.
FIG. 5 is an SEM image of an electrode for lithium ion secondary battery according to Example 5.
FIG. 6 is an SEM image of an electrode for lithium ion secondary battery according to Comparative Example 1.
FIG. 7 is an SEM image of an electrode for lithium ion secondary battery according to Comparative Example 2.

### [DETAILED DESCRIPTION OF THE EMBODIMENTS]

Hereinafter, actions and effects of the invention will be described in more detail with reference to specific examples of the invention. However, this is presented as an example to aid in the understanding of the invention. The following examples are not intended to limit the scope of the invention in any way. It would be obvious to those skilled in the art that various changes and modifications can be made within the scope and technical spirit of the invention.

### Example 1

An electrode material composition composed of: 95.6 wt.% of an active material consisting of 90 wt.% of a graphite active material in which artificial graphite and natural graphite were mixed in a ratio of 3:7, and 10 wt.% of SiO; 1 wt.% of acetylene black as a conductive material; 1.1 wt.% of carboxymethyl cellulose(CMC) and 2.3 wt.% of styrene butadiene rubber(SBR) as a binder was prepared. The electrode material composition was coated onto one surface of a copper current collector with a thickness of 8 ,um using a comma coater. This was dried and rolled at 130°C to prepare a negative electrode plate on which a negative electrode active material layer was laminated. The negative electrode active material layer was formed to have a porosity of 24% and a thickness of 44 *µ*m.

Inorganic fine particles AIO(OH) and a dispersant (BYK, DISPERBYK-111) were mixed with N-methyl-2-pyrrolidone(NMP) to prepare an inorganic fine particle dispersion with a solid content of 40%. At this time, the particle size (D60) of the inorganic fine particles measured using a particle size analyzer was analyzed to be 400 nm.

As a polymer binder, spandex (weight average molecular weight: 200,000 g/mol) and poly(vinylidene fluoride-co-hexafluoropropylene) (PVdF-HFP) were mixed at a weight ratio of 50:50 to prepare a 10 wt.% binder solution dissolved in NMP.

Here, the spandex is a block copolymer composed of the hard segment of Chemical Formula 1 and the soft segment of Chemical Formula 2. The spandex is a copolymer comprising the hard segment of Chemical Formula 1 in which the R¹ and R³ each has a structure of 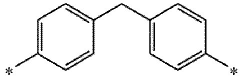 derived from 4,4'-diphenylmethane diisocyanate(4,4'-MDI), and the R² has a structure of an ethylene group (*-CH₂-CH₂-*) derived from ethylene diamine(EDA); and the soft segment of Chemical Formula 2 in which the R⁴ has a structure of a butylene group(*-CH₂-CH₂-CH₂-CH₂-*) derived from polytetramethylene ether glycol (PTMEG). The molar ratio of the hard segment and the soft segment in the spandex is 85:15.

A slurry for forming a porous layer in which the inorganic fine particle dispersion and the binder solution were uniformly mixed using a homogenizer mixer was obtained. The slurry for forming a porous layer was applied onto the negative electrode active material layer, and then dried at 130°C to obtain a negative electrode plate with a porous layer formed on the negative electrode active material layer. The composition of the porous layer consisted of 90 wt.% of the inorganic fine particles and 10 wt.% of the polymer binder. The porous layer was formed to have a thickness of 20 *µ*m.

The negative electrode plate was punched to a size of 31 × 43 mm using a mold punching machine to prepare the negative electrode portion.

A mixture composed of 94 wt.% of LiNiCoMnO₂ (Ni:Co:Mn=8:1:1) as the positive electrode active material, 3 wt.% of a conductive carbon black (Super P; IMERYS Graphite & Carbon) as a conductive material, and 3 wt.% of polyvinylidene fluoride as a binder was added to NMP to prepare a uniformly dispersed slurry. The slurry was coated onto one surface of an aluminum current collector, which was then dried and rolled to prepare a positive electrode plate on which a positive electrode active material layer was laminated. The positive electrode plate was punched using a mold punching machine to prepare a 30×42 mm positive electrode portion.

The positive electrode active material layer of the positive electrode portion was disposed in contact with the porous layer of the negative electrode portion to produce an electrode assembly.

The electrode assembly was housed in a pouch to form a small cell, and an electrolyte was injected into the pouch to manufacture five lithium secondary batteries.

At this time, as the electrolyte solution, a solution was used in which 1.0 M LiPF₆ and 2 wt.% vinylene carbonate(VC) were dissolved in a non-aqueous organic solvent in which ethylene carbonate(EC) and ethyl methyl carbonate(EMC) was mixed at a volume ratio of 3:7.

### Example 2

A negative electrode portion, a positive electrode portion, and a lithium ion secondary battery were produced in the same manner as in Example 1, except that only the spandex was used as the polymer binder instead of the mixture of spandex and PVdF-HFP.

### Example 3

A negative electrode portion, a positive electrode portion, and a lithium ion secondary battery were produced in the same manner as in Example 1, except that the composition of the slurry for forming the porous layer was adjusted so that the porous layer was composed of 92 wt.% of the inorganic fine particles and 8 wt.% of the polymer binder.

### Example 4

A negative electrode portion, a positive electrode portion, and a lithium ion secondary battery were produced in the same manner as in Example 3, except that only the spandex was used as the polymer binder instead of the mixture of spandex and PVdF-HFP.

### Example 5

A negative electrode portion, a positive electrode portion, and a lithium ion secondary battery were produced in the same manner as in Example 1, except that the composition of the slurry for forming the porous layer was adjusted so that the porous layer was composed of 85 wt.% of the inorganic fine particles and 15 wt.% of the polymer binder.

### Comparative Example 1

A negative electrode portion, a positive electrode portion, and a lithium ion secondary battery were produced in the same manner as in Example 1, except that a mixture of polyetherimide and PVdF-HFP at a weight ratio of 50:50 was used as the polymer binder instead of the mixture of spandex and PVdF-HFP.

### Comparative Example 2

A negative electrode portion, a positive electrode portion, and a lithium ion secondary battery were produced in the same manner as in Example 1, except that only PVdF-HFP was used as the polymer binder instead of the mixture of spandex and PVdF-HFP.

### Experiment Example 1

A weight average molecular weight(Mw) and a number average molecular weight(Mn) of the copolymer prepared in an example were measured using gel permeation chromatography (GPC, Waters E2640).

In detail, the copolymer was dissolved in hexafluoro isopropanol(HFIP) at a concentration of 2 mg/ml, and 20 *µ*ℓ thereof was injected into GPC. HFIP was used as a mobile phase of GPC, and introduced at a flow rate of 1.0 mL/min, and the analysis was performed at 40°C. Two Agilent Mixed-B columns were connected in series. As a detector, an RI detector was used. Mw values were derived using a calibration curve formed using polystyrene standard samples. 9 kinds of polystyrene standard samples, each having a weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, or 10,000,000 g/mol, were used.

### Experiment Example 2

The bending characteristics of the negative electrode plates according to Examples and Comparative Examples were evaluated using a mandrel method. The diameter of the rod where cracks occurred is shown in Table 1 below.

### Experimental Example 3

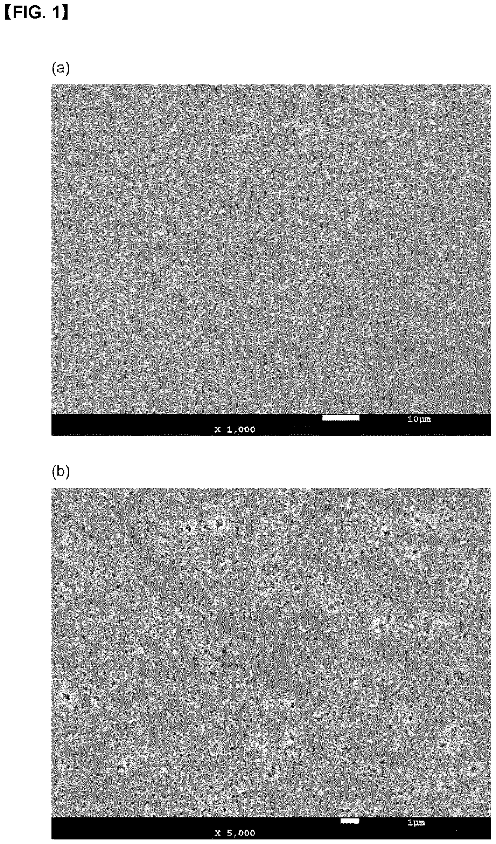

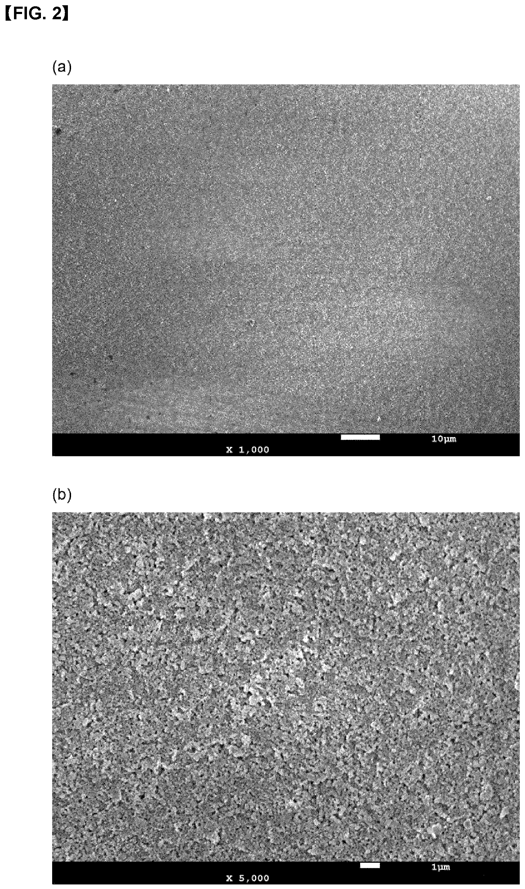

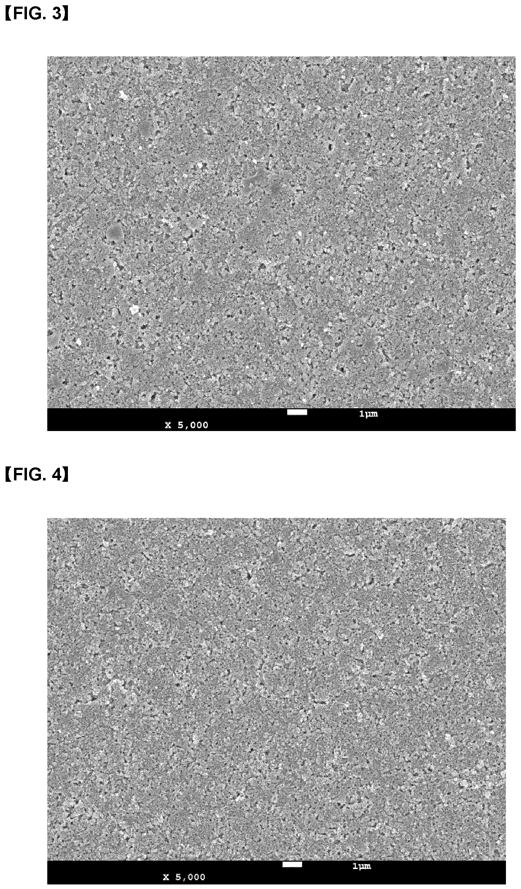

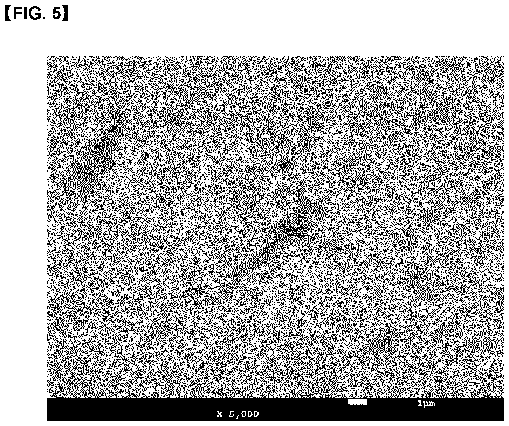

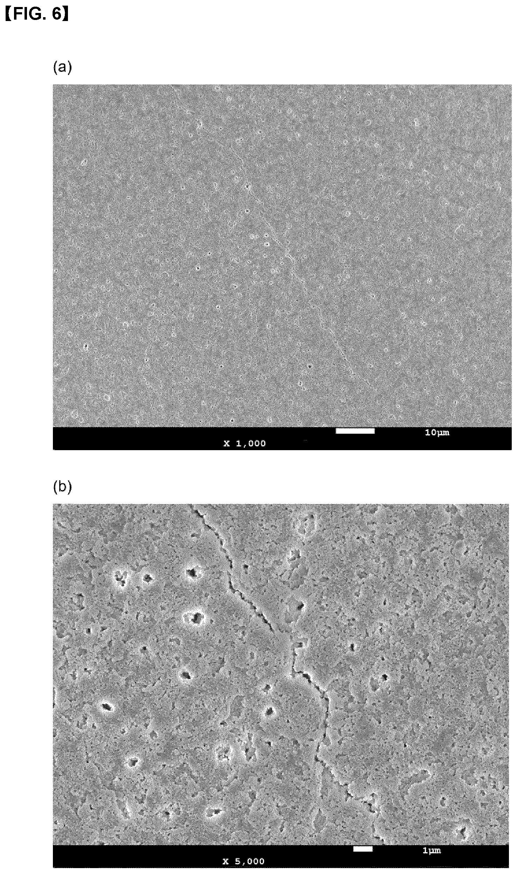

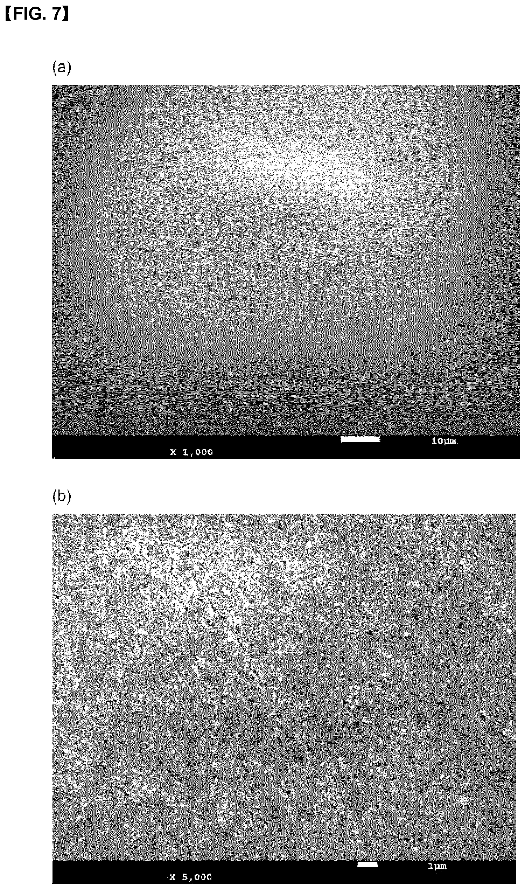

The negative electrode plate in which the porous layer according to Examples and Comparative Examples was formed on the negative electrode active material layer was observed with a scanning electron microscope, and the results are shown in FIG. 1 (Example 1), FIG. 2 (Example 2), FIG. 3 (Example 3), FIG. 4 (Example 4), FIG. 5 (Example 5), and FIG. 6 (Comparative Example 1) and FIG. 7 (Comparative Example 2). In FIGS. 1, 2, 6, and 7, (a) is an SEM image at 1000 × magnification, and (b) is an SEM image at 5000 × magnification. FIGS. 3, 4, and 5 are SEM images at 5000 × magnification, respectively.

Referring to FIGS. 1 to 5, a uniform surface condition without microcracks could be observed in the negative electrode plates according to Examples.

Referring to FIG. 6, cracks were easily observed in the negative electrode plate according to Comparative Example 1 due to the non-flexible polymer binder characteristics. Specifically, in Comparative Example 1, it was observed that the surface was rougher than in Example 1, and relatively large pores of around 1 ,um were unevenly distributed.

Referring to FIG. 7, in the negative electrode plate according to Comparative Example 2, the surface roughness was slightly reduced compared to Comparative Example 1, but cracks on the surface could still be easily observed.

### Experimental Example 4

Immediately after production of the lithium secondary batteries (5 samples each) obtained in Examples and Comparative Examples, the open circuit voltages (OCV) were measured respectively, and shown as the average values of five samples in Table 1 below.

The lithium secondary batteries (5 samples each) obtained in Examples and Comparative Examples were charged at 0.1 C (reference capacity: 4.5 mAh/cm²) under a CC-CV mode at 25°C until the voltage reached 4.2 V, and the voltage was maintained under a CV mode until it reached 0.05 C. Subsequently, a formation process was performed by discharging to 2.5 V at 0.1 C, and the discharge capacity (mAh) was shown as the average value of five samples in Table 1 below.

During the formation process, the number of defective samples in which charge and discharge did not occur normally due to short circuits among the five samples produced in Examples and Comparative Examples was confirmed, and is shown in Table 1 below.

**[Table 1]**

| | Mandrel diameter (Φ) | OCV (V) | Discharge capacity (mAh) | Number of defects (count) |
|---|---|---|---|---|
| Example 1 | 4 | 0.16 | 42.9 | 1 |
| Example 2 | 2 | 0.18 | 50.4 | 0 |
| Example 3 | 4 | 0.12 | 45.0 | 1 |
| Example 4 | 2 | 0.15 | 47.1 | 1 |
| Example 5 | 2 | 0.19 | 48.0 | 0 |
| Comparative Example 1 | 12 | 0.03 | 25.4 | 3 |
| Comparative Example 2 | 6 | 0.10 | 29.5 | 2 |

Referring to the results of Experimental Examples, the lithium secondary batteries of Examples exhibited excellent assembly stability with no defects due to short circuit between the negative electrode portion and the positive electrode portion, while exhibiting a high discharge capacity.

The lithium ion secondary battery of Comparative Example 1 had a low initial open circuit voltage and a defective rate of about 60%, resulting in low assembly stability due to the low bending characteristics of the negative plate and surface cracks.

In addition, the lithium ion secondary battery of Comparative Example 2 was slightly better in terms of bending characteristics and surface cracks of the negative electrode plate than Comparative Example 1, but the initial open circuit voltage was still lower than that of Examples, and the defect rate was about 40%, showing that the assembly stability was low.

While the present disclosure has been particularly shown and described with reference to several embodiments and illustrative drawings, the present disclosure is not limited to these embodiments, and it would be apparent to those skilled in the art that many modifications and variations can be made without departing from the spirit and scope of the invention as defined by the appended claims.

## Claims

1. An electrode for lithium ion secondary battery comprising:
an electrode active material layer and a porous layer laminated on an electrode current collector layer,
wherein the porous layer comprises a polymer binder including a copolymer containing a hard segment of the following Chemical Formula 1 and a soft segment of the following Chemical Formula 2 and inorganic fine particles dispersed in the polymer binder: 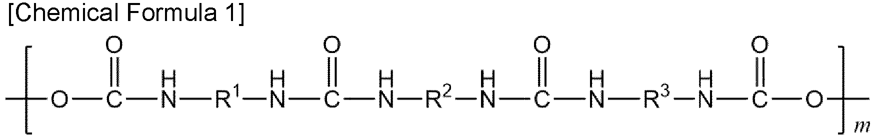 wherein in Chemical Formula 1,
R¹ and R³ are each independently 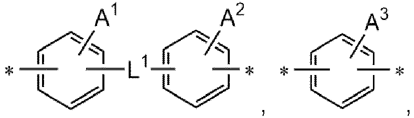 or 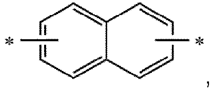 wherein A¹ to A³ are each independently hydrogen or an alkyl group having 1 to 3 carbon atoms, and L¹ is a chemical bond or a methylene group;
R² is an alkylene group having 1 to 5 carbon atoms; 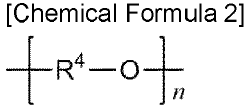 wherein in Chemical Formula 2,
R⁴ is an alkylene group having 3 to 6 carbon atoms.

2. The electrode for lithium ion secondary battery according to claim 1, wherein the R¹ and R³ are each independently

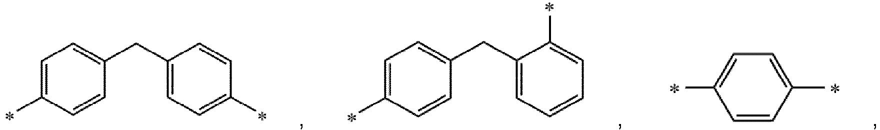

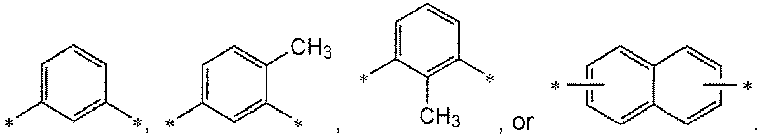

3. The electrode for lithium ion secondary battery according to claim 1, wherein the copolymer includes the hard segment and the soft segment at a molar ratio of 80:20 to 95:5.

4. The electrode for lithium ion secondary battery according to claim 1, wherein the copolymer has a weight average molecular weight Mw of 100,000 g/mol to 1,000,000 g/mol.

5. The electrode for lithium ion secondary battery according to claim 1, wherein the polymer binder further comprises one or more binder compounds selected from the group consisting of polyetherimide, polyvinylidene fluoride, poly(vinylidene fluoride-co-trichloroethylene), poly(vinylidene fluoride-co-chlorotrifluoroethylene), poly(vinylidenefluoride-co-trifluoroethylene), poly(vinylidenefluoride-co-tetrafluoroethylene), poly(vinylidenefluoride-co-hexafluoropropylene), butylacrylate, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

6. The electrode for lithium ion secondary battery according to claim 5, wherein the binder compounds are included in an amount of 10 wt.% or more based on the total weight of the polymer binder including a copolymer containing the hard segment of Chemical Formula 1 and the soft segment of Chemical Formula 2.

7. The electrode for lithium ion secondary battery according to claim 1, wherein the inorganic fine particles are one or more selected from the group consisting of SrTiOs, SnO₂, CeO₂, MgO, NiO, CaO, ZnO, ZrO₂, Y₂O₃, Al₂O₃, AIO(OH), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃, 0<x<2, 0<y<3, LiₓAl_{y}Ti_{z}(PO₄)₃, 0<x< 2, 0<y<1, 0<z<3, (LiAlTiP)ₓO_{y}, 0<x<4, 0<y<13, LiₓLa_{y}TiO₃, 0<x<2, 0<y<3, LiₓGe_{y}P_{z}S_{w}, 0<x<4, 0<y<1, 0<z<1, 0<w<5, LiₓN_{y}, 0<x<4, 0<y<2, LiₓSi_{y}S_{z}, 0<x<3, 0<y<2, 0<z< 4, and LiₓP_{y}S_{z}, 0<x<3, 0<y<3, 0<z<7.

8. The electrode for lithium ion secondary battery according to claim 1, wherein the inorganic fine particles have a particle size of 0.001 *µ*m to 10 *µ*m.

9. The electrode for lithium ion secondary battery according to claim 1, wherein the porous layer includes 0.5 to 45 wt.% of the polymer binder and 55 to 99.5 wt.% of the inorganic fine particles.

10. A method of manufacturing the electrode for lithium ion secondary battery according to claim 1, the method comprising the steps of:
forming an electrode active material layer by applying an electrode material composition containing an electrode active material onto an electrode current collector layer;
preparing an inorganic fine particle dispersion in which inorganic fine particles and a dispersant are dispersed in a solvent;
preparing a binder solution in which a polymer binder including a copolymer containing a hard segment of the following Chemical Formula 1 and a soft segment of the following Chemical Formula 2 is dissolved in a solvent;
preparing a slurry for forming a porous layer by mixing the binder solution with the inorganic fine particle dispersion; and
forming a porous layer by applying the slurry for forming a porous layer onto the electrode active material layer, 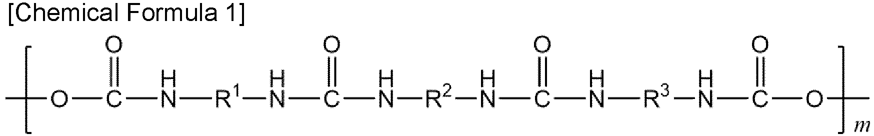 wherein in Chemical Formula 1,
R¹ and R³ are each independently 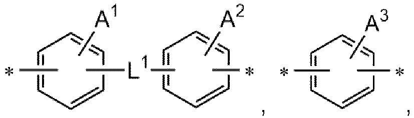 or 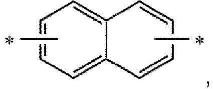 wherein A¹ to A³ are each independently hydrogen or an alkyl group having 1 to 3 carbon atoms, and L¹ is a chemical bond or a methylene group;
R² is an alkylene group having 1 to 5 carbon atoms; 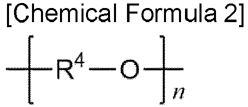 wherein in Chemical Formula 2,
R⁴ is an alkylene group having 3 to 6 carbon atoms.

11. The manufacturing method according to claim 10, wherein the slurry for forming a porous layer has 55 wt.% to 99.5 wt.%. of a solid content including the inorganic fine particles.

12. A slurry for forming a porous layer of an electrode for lithium ion secondary battery, comprising: a polymer binder including a copolymer containing a hard segment of the following Chemical Formula 1 and a soft segment of the following Chemical Formula 2 and inorganic fine particles dispersed in the polymer binder: 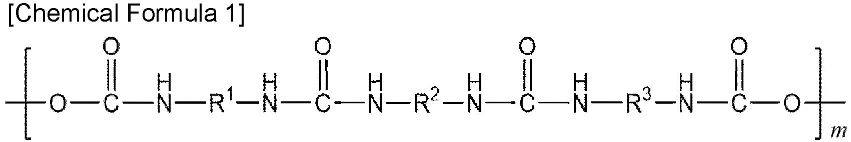 wherein in Chemical Formula 1,
R¹ and R³ are each independently 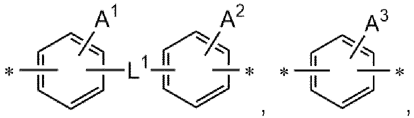 or 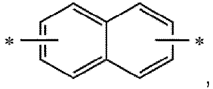 wherein A¹ to A³ are each independently hydrogen or an alkyl group having 1 to 3 carbon atoms, and L¹ is a chemical bond or a methylene group;
R² is an alkylene group having 1 to 5 carbon atoms; 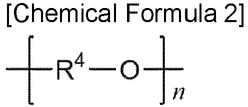 wherein in Chemical Formula 2,
R⁴ is an alkylene group having 3 to 6 carbon atoms.

13. The slurry for forming a porous layer of an electrode for lithium ion secondary battery according to claim 12, wherein the copolymer includes the hard segment and the soft segment at a molar ratio of 80:20 to 95:5.

14. The slurry for forming a porous layer of an electrode for lithium ion secondary battery according to claim 12, wherein the polymer binder and the inorganic fine particles are included in a ratio of 0.5 to 45 wt.%: 55 to 99.5 wt.%.

15. A lithium ion secondary battery comprising the electrode for lithium ion secondary battery according to claim 1.
